# EUROPEAN PATENT SPECIFICATION

(11) **EP 2 698 459 B1**
(45) Date of publication and mention of the grant of the patent: **11.08.2021**
(21) Application number: 12771901.1
(22) Date of filing: 21.03.2012
(51) Int. Cl.: D03D 15/00, D03D 1/00, D03D 11/00, B32B 5/06, B32B 5/26, B32B 5/02

(54) **Two-layer fabric for the manufacturing of unwoven fabrics**
Zweischichtiges Gewebe für die Herstellung von Vliesstoffe
Tissu à deux couches pour la fabrication de tissus non tissés

(30) Priority: 11.04.2011 JP 2011087484
(43) Date of publication of application: 19.02.2014
(73) Proprietor: Nippon Filcon Co., Ltd., Inagi-shi Tokyo 206-8577 (JP)
(72) Inventor: USUKI Tsutomu, Fuji-shi, Shizuoka 419-0201 (JP)
(74) Representative: SSM Sandmair
(86) International application number: PCT/JP2012/057096
(87) International publication number: WO 2012/140993

(56) References cited:
- WO-A1-98/19860
- JP-A- 2006 057 215
- JP-A- 2008 133 570
- JP-A- 2009 540 135
- US-A- 726 677
- US-A- 5 829 489

## Description

### TECHNICAL FIELD OF THE INVENTION

The present invention relates to a fabric used for manufacturing unwoven fabric, in particular, relates to an anti-dirt two-layer fabric for unwoven fabric which can keep the anti-dirt effect for a long time.

### BACKGOUND ART

Conventionally, an industrial fabric woven by wefts and warps has been used for a transporting or filtering application in a manufacturing process of papers, unwoven fabric, building material, etc.. Such industrial fabric needs to possess a high rigidity, a good dimension stability, and anti-dirt characteristics, etc. for any applications.

More specifically, the high rigidity is required in order to hold and transport an object such as material, flotation material component, etc.. In particular, in case of the manufacturing process of the building material, or the filtering process, the high rigidity is essential for the fabric which deals with the heavy material or the flotation material component. Further, the dimension stability is needed in order to constantly run the fabric in a stable manner. In addition, in order to always supply products of papers, unwoven fabric, or the building material with stable quality, the anti-dirt characteristics is important for efficient filtering and transportation.

In particular, the anti-dirt characteristics of the fabric is important for an air raid process which is one of the processes of manufacturing unwoven fabric, since it is closely associated with the problem of adhesion of fibers. Here, the air raid process is the process in which pulp sheet and synthetic fibers of short fibers are dispersed in air to be formed on an wire. A main process of binding fibers is an adhesive type in which the fibers are fused to be bound by suing adhesive fibers, etc.. However, in the air raid process using the adhesion type, it was pointed out that the adhesive fibers are fused with the fabric on the wire.

Therefore, recently, yarns and plastic material with a view to attain the anti-dirt effect have been developed, in particular. For instance, a technology in which the yarn constituted by blending fluoro polymer such as copolymer of ethylene- tetrafluoroethylene (referred to as " ETFE " hereinafter) and dicarboxylic acid in aromatic series such as polyethylene terephthalate (referred to as "PET" hereinafter) (refer to Patent Publication 1).

Nowadays, the above fluorine plastic with a excellent anti-dirt characteristic has been widely used for the anti-dirt application.

However, high rigidity such as predetermined breaking strength and predetermined tension strength was required in addition to the anti-dirt effect, in order to use the fabric for unwoven fabric. Since the fabric woven only by the above fluorine plastic such as ETFE exhibits a poor rigidity, it was technically difficult to obtain a sufficient strength as the fabric used in the process of manufacturing the unwoven fabric.

Here, a rate of an amount of polymer blend with a high rigidity such as PET, etc. only needs to be increased in order to improve the rigidity, while on the other hand, a rate of an amount of fluorine plastic only needs to be increased in order to improve the anti-dirt characteristics.

Accordingly, the composition of the yarn for attaining the rigidity is not compatible with that for attaining the anti-dirt characteristics, so that it was pointed out that it was technically difficult to sufficiently obtain both of the rigidity and the anti-dirt characteristics required for the industrial fabric only by the composition of the yarn constituting the fabric.

Such being the case, in view of fully obtaining both of the rigidity and the anti-dirt characteristics required for the industrial fabric, the technology related to the fabric for web the surface of which is coated with at least two kinds of plastics among fluorine plastic, silicon plastic, and epoxy plastic was disclosed (refer to Patent Publication 2). In addition, the technology related to an anti-dirt industrial fabric which uses composite yarns forming a film made of silicon or fluorine plastic was developed (refer to Patent Publication 3).

However, if these fabrics are used for the process of manufacturing the unwoven fabric, as the term for use becomes long, a risk of the plastic film coming away due to the wear of these fabrics arises, so that it is presumed that it becomes technically difficult to keep the anti-dirt effect for a long time.

Patent Publication 1: Japanese Patent Laid-open Publication HEI11-189947
Patent Publication 2: Japanese Patent Laid-open Publication SHO57-171790
Patent Publication 3: Japanese Patent Laid-open Publication 2008-133570

A two-layer fabric according to the preamble of claim 1 is known from US 7216677 B2. DISCLOSURE OF THE INVENTION

### TECHNICAL PROBLEMS TO BE SOLVED BY PRESENT INVENTION

The object of the present invention is to provide an anti-dirt two-layer fabric for unwoven fabric which is capable of keeping the anti-dirt effect even if its surface gets worn due to its use for a long time in a process of manufacturing the unwoven fabric, while at the same time, enhancing an anti-adhesion effect by adopting fluorine plastic and attaining characteristics required for the fabric for unwoven fabric such as rigidity, etc.,

### MEANS TO SOLVE TECHNICAL PROBLEMS

The above technical problem is solved by the features according to claim 1.

### EFFECT OF THE INVENTION

According to the anti-dirt two-layer fabric for unwoven fabric of the present invention, anti-adhesion effect by which fibers, etc. is prevented from being adhered thereto is enhanced by adopting fluorine plastic and characteristics required for the fabric for unwoven fabric such as rigidity is attained, while at the same time, the anti-dirt effect is kept even if its surface gets worn due to its use for a long time in a process of manufacturing the unwoven fabric.

### DETAILED DESCRIPTION OF THE INVENTION

Now, the structure and the effect of the two-layer fabric for unwoven fabric of the present invention will be described below. Embodiments of the two-layer fabric for unwoven fabric of the present invention will be described thereafter with reference to the drawings.

The two-layer fabric for unwoven fabric of the present invention is the one which includes at least one upper surface side fabric constituted by upper surface side warps and upper surface side wefts, at least one lower surface side fabric constituted by lower surface side warps and lower surface side wefts, and binding weft yarns each of which binds the upper surface side fabric and the lower surface side fabric.

Here, one of the technical features of the present invention is that, in the upper surface side fabric, fluorine plastic is adopted for the upper surface side warps and the upper surface side wefts. As such, the upper surface side fabric is constituted only by fluorine plastic, while, in the lower surface side fabric, the lower surface side warps and the lower surface side wefts are constituted by general yarns. In addition, the binding weft yarns are adapted to be woven so as to effect an inner binding in a case where they are bound by the upper surface side warps. Here, the inner binding is defined to arrange the binding weft yarns so as not to appear on the surface of the fabric. Another of the technical features of the present invention is that the two-layer fabric for unwoven fabric adopts an on-stack structure in which the upper and lower surface side warps, and the upper and lower surface side wefts are woven to be arranged in a perpendicular positional relation, respectively,

In the present invention, a complete structure of the fabric is defined to be the minimum unit to be repeated of the fabric structure. The fabric is completed by combining any number of such complete structures in the longitudinal direction and the direction perpendicular to the longitudinal direction.

In the present invention, a knuckle is a portion of a warp which passes above or below one or a plurality of wefts to protrude from the surface. In addition, a crimp is a long floating structure which is formed on the surface by the wefts passing above or below one or a plurality of warps.

Further, the on-stack structure is the one in which upper and lower yarns in the same direction are vertically overlapped with each other.

Conventionally, in order to improve the anti-dirt effect, the fabric in which yarns made of fluorine plastic are used for surface wefts are publicly known. However, since the yarns made of fluorine plastic lack in the durability, the rigidity of the fabric is decreased in a case where all the wefts are constituted by the yarns made of fluorine plastic, whereby it becomes technically difficult to use such a fabric for the process of manufacturing unwoven fabric in a practical basis. In addition, it was not feasible to adopt the yarns made of fluorine plastic for the warps which largely influence on the extension characteristics of the fabric. Such being the case, general yarns have been used for the surface which contacts the unwoven fabric, so that the fabric with sufficient anti-dirt characteristics could not be obtained.

Accordingly, the present inventor created the two-layer fabric for unwoven fabric which adopts the yarns made of fluorine plastic for the yarns constituting the surface contacting the unwoven fabric to be transported, and adopts the yarns made of fluorine plastic for the upper surface side layer, while the general yarns for the lower surface side layer, in order to attain the characteristics required for the fabric for the unwoven fabric, and is constituted by the upper and lower surface side layers woven by the binding weft yarns.

The two-layer fabric for unwoven fabric of the present invention is the one which attains the characteristics required for the fabric for the unwoven fabric, while at the same time, uses the yarns made of fluorine plastic. The two-layer fabric for unwoven fabric of the present invention is constituted by the upper surface side warps, the upper surface side wefts, the lower surface side warps, the lower surface side wefts, and the binding weft yarns which weave the upper surface side warps and the lower surface side warps.

The yarns made of fluorine plastic are used for the upper surface side warps and the upper surface side wefts constituting the upper surface side layer. Accordingly, in the present invention, the anti-dirt characteristics of the fabric can be obtained by using the yarns made of fluorine plastic for the yarns at the upper surface side directly contacting the unwoven fabric, while the rigidity and the extension characteristics of the fabric can be secured by using the general yarns for the lower surface side warps and the lower surface side wefts constituting the lower surface side layer.

In addition, the binding weft yarns are arranged so as not to appear on the surface of the fabric by the inner binding by which the binding weft yarns and the upper surface side warps are woven with each other at a portion where the upper surface side warps are woven inside the fabric.

The fabric which attains the characteristics required for the fabric for unwoven fabric can be provided by the fact that the upper surface side layer and the lower surface side layer are woven with each other by the binding weft yarns and all of the surface contacting the unwoven fabric is constituted by the yarns made of fluorine plastic.

In addition, by adopting the on-stack structure, the lower surface side fabric is prevented from being exposed due to the cover of the upper surface side fabric, so that only the upper surface side fabric which enhances the anti-dirt effect contacts the unwoven fabric on the surface of the fabric.

Further, in the fabric of the present invention, auxiliary wefts with a diameter smaller than that of the upper side surface side weft may be arranged between the upper surface side wefts. For instance, surface properties can be improved by the fact that the upper surface side wefts and the auxiliary wefts are arranged in an alternate manner.

The fluorine plastic which is material for the upper surface side warps and the upper surface side wefts of the fabric of the present invention may be preferably composite plastic containing fluorine with high anti-dirt. For instance, at least one material can be selected from a group of polytetrafluoroethylene (PTFE), copolymer of tetrafluoroethylene and hexafluoropropylene (FEP), copolymer of tetrafluoroethylene and fluoro vinyl ether (PFA), polyvinylidene fluoride (PVDF), copolymer of ethylene and tetrafluoroethylene (ETFE), and copolymer of ethylene and chlorotrifluoroethylene(ECTFE). In particular, ETFE is suitable for the anti-dirt characteristics and cost.

In this connection, it is preferable to impregnate silicon plastic in the fluorine plastic material (water dispersion) in order to improve the flexibility. In addition, the color of the surface of the fabric can be freely changed by adding various kinds of pigment to the fluorine plastic material (water dispersion) .

The general yarn used for the lower surface side fabric can be polyester, polyamide, polyphenylene sulfide, polypropylene, aramid, polyether ketone, polyethylene naphthalate, polytetrafluoroethylene, etc.

The configuration of the yarn includes, in addition to monofilaments, multifilaments, spun yarns, finished yarns subjected to crimping or bulking such as so-called textured yarn, bulky yarn and stretch yarn, and yarns obtained by intertwining them. As the cross-section of the yarn, not only circular form but also square or short form such as stellar form, or elliptical or hollow form can be used.

The unwoven fabric needs to have a high rigidity, since it is used with being stretched in the warp direction. In view of this, the configuration of the yarn is preferably the monofilaments. The fabric of the present invention can be suitably used under the high tension by adopting monofilaments with a high rigidity as the lower surface side warp.

In addition, the structure in which the upper surface side fabric and the lower surface side fabric are woven with each other by arranging the auxiliary weft at the upper surface side of the binding weft yarn may be adopted.

Here, the auxiliary weft cooperates with the binding weft yarn to form the on-stack structure to improve the surface smoothness.

Now, the embodiments of the present invention will be described below with reference to the drawings. Here, the design view corresponds to the complete structure of the fabric defining the minimum unit to be repeated of the fabric structure. The fabric recited in the claims corresponds to this complete structure. The final product is completed by combining any number of such complete structures in the longitudinal direction and the direction perpendicular to the longitudinal direction.

In each of the design views, the warp is indicated by a reference number such as 1,2,3 ...... The upper and lower warps are indicated by the reference number to which U and D are attached, respectively.

The weft is indicated by a reference number such as 1',2' ,3' ...... The upper surface side weft and the lower surface side weft are indicated by the reference number to which u and d are attached, respectively, such as 1'u, 2'd, etc.. In addition, the binding weft yarn and the auxiliary weft are indicated by the reference number to which b and f are attached, respectively, such as 1'u, 1'd, 2'b, 2'f, etc.

In each of the design views, a symbol "X" indicates that the upper surface side warp is arranged above the upper surface side weft or the auxiliary weft, and a symbol "O" indicates that the lower surface side warp is arranged below the lower surface side weft. A solid square symbol "■" indicates that the binding weft yarn is arranged above the upper surface side warps, and an open square symbol "□" indicates that the binding weft yarn is arranged below the lower surface side warps. In this connection, the symbols "■" and "□" are depicted as an elongate rectangle at the upper portion of the grid in each of the design views.

### First Embodiment

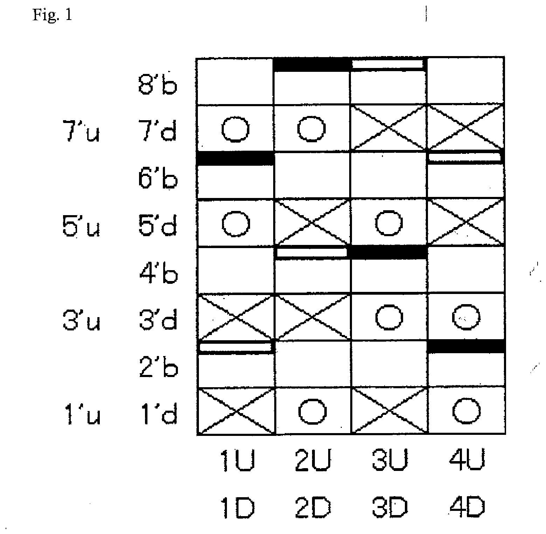

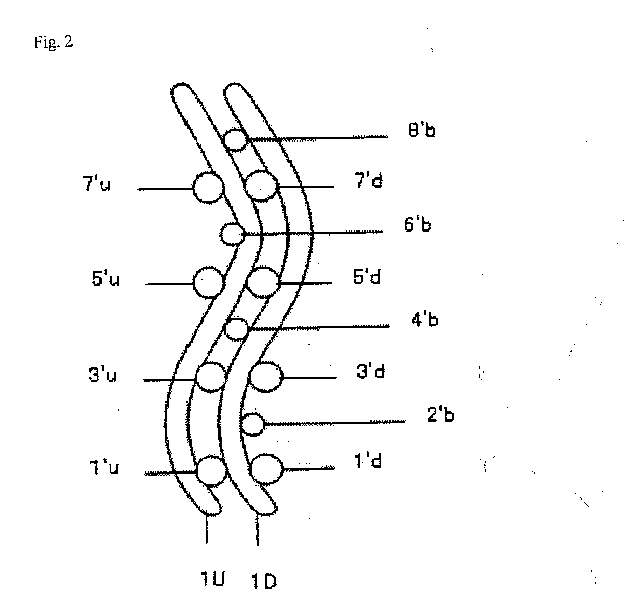

Fig.1 is a design view showing a complete design of the two-layer fabric for unwoven fabric according to the first embodiment. Fig.2 is a cross section view taken along the warp 1 in Fig.1

The two-layer fabric for unwoven fabric of the first embodiment in Fig.1 constitute a two-layer fabric including the upper surface side warp U, the lower surface side warp D, the upper surface side weft u, the lower surface side weft d, and the binding weft yarn b.

As shown in Fig.1, a knuckle at the upper surface side is formed by the fact the upper surface side warp 1U passes above the upper surface side weft 1'u, and passes above the upper surface side weft 2'u and the binding weft yarn 4'b. Then, the upper surface side warp 1U passes below the upper surface side weft 5'u and passes below the binding weft yarn 6'b and the upper surface side weft 7'u and passes above the binding weft yarn 8'b.

In addition, a knuckle at the lower surface side is formed by the fact the lower surface side warp 1D passes above the lower surface side weft 1'd, and passes above the binding weft yarn 2'b and the lower surface side weft 3'd, and then, passes below the binding weft yarn 4'b, the lower surface side weft 5'd, the lower surface side weft 7'd and the binding weft yarn 8'b. Here, with respect to the binding weft yarn b, the binding weft yarn 6'b passes above the upper surface side warp 1U to weave the upper surface side layer, and then, passes between the upper surface side warp 2U and the lower surface side warp 2D and between the upper surface side warp 3U and the lower surface side warp 3D and passes below the lower surface side warp 4D to bind the upper and lower surface side layers.

As shown in Fig.2, the binding weft yarn 6'b is shown to be located inside the upper surface side knuckle forming the upper surface side layer and the upper surface side wefts 5'u and 7'u at a portion where the binding weft yarn 6'b weaves the upper surface side layer. As such, the inner binding is formed at the binding weft yarn 6'b and the upper surface side warp 1U, so that the upper surface side layer is woven without the binding weft yarn being exposed to the surface.

In addition, the yarns constituting the lower surface side fabric are prevented from directly contacting the unwoven fabric to be transported by the fabric, due to the on-stack structure of the warps and the wefts.

By the above configuration, the two-layer anti-dirt fabric for unwoven fabric in the first embodiment enhances the anti-adhesion effect by which the fibers are not adhered to the fabric, while attains the physical properties required for the fabric such as the rigidity by adopting the fluorine plastic, and keeps the anti-dirt effect even when the surface of the fabric gets worn out.

### Second Embodiment

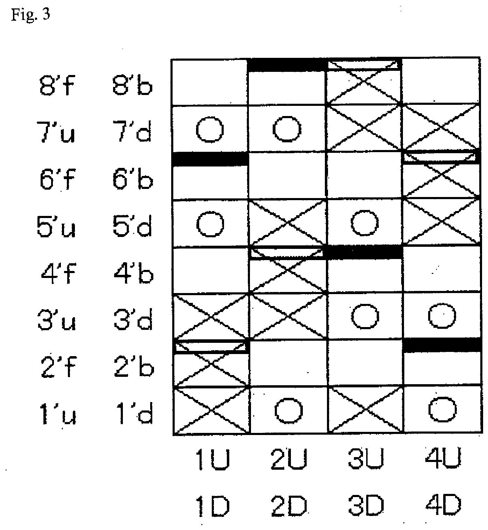

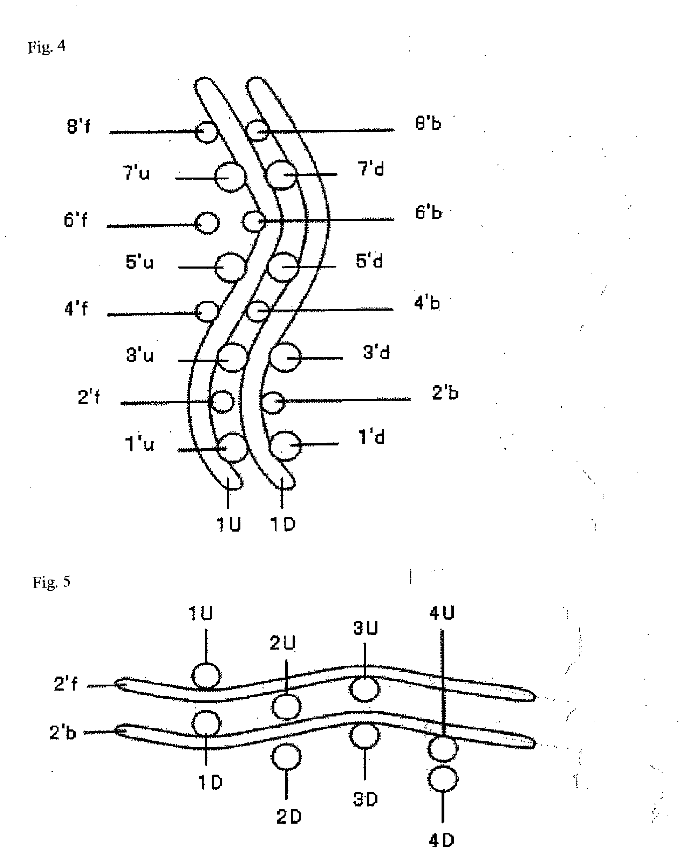

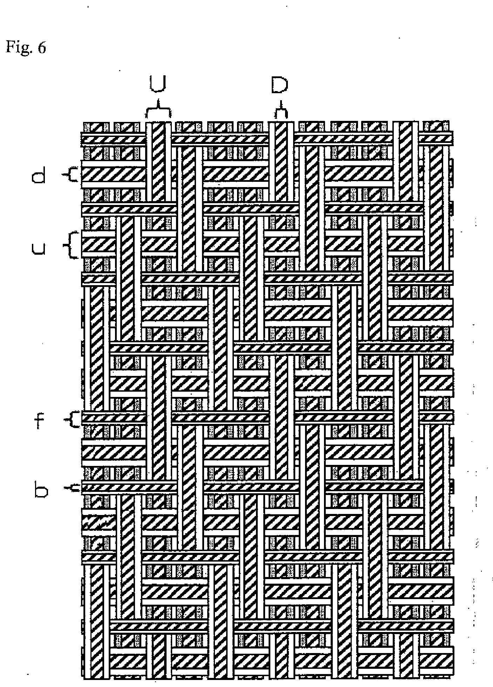

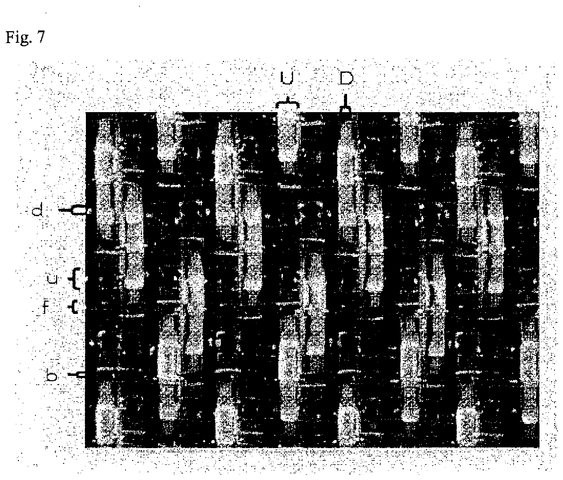

Fig.3 is a design view showing a complete design of the second embodiment. Fig.4 is a cross section view taken from the warp 1 in Fig.3. Fig.5 is a cross section view taken from the weft 2' in Fig.3. Fig.6 is a plane view of the upper surface side in Fig.3. In Fig.6, the lower surface side yarns are indicated by a diagonal line in order to show the upper surface side warp constituted by the fluorine plastic and the lower surface side yarns constituted by the general yarns under the upper surface side weft. In addition, the lower surface side warps and wefts are shown to be thinner than the upper surface side warps and wefts in the above Figs, in order to indicate the overlapped yarns. In fact, the diameters of the lower surface side warps and wefts, and the upper surface side warps and wefts may be appropriately selected. Fig.7 is a photograph of the surface of the fabric of the second embodiment.

As shown in Fig.3, the two-layer fabric for unwoven fabric of the second embodiment in Fig.3 constitute a two-layer fabric including the upper surface side warp U, the lower surface side warp D, the upper surface side weft u, the lower surface side weft d, and the binding weft yarn b.

As shown in Fig.3, a knuckle at the upper surface side is formed by the fact the upper surface side warp 1U passes above the upper surface side weft 1'u, and passes above the binding weft yarn 2'f and the upper surface side weft 3'u. Then, the upper surface side warp 1U passes between the binding weft yarn 4'f and the binding weft yarn 4'b, and passes below the upper surface side weft 5'u, the binding weft yarn 6'b and the upper surface side weft 7'u, and passes between the binding weft yarn 8'f and the binding weft yarn 8'b.

In addition, a knuckle at the lower surface side is formed by the fact the lower surface side warp 1D passes above the lower surface side weft 1'd, and passes above the binding weft yarn 2'b and the lower surface side weft 3'd, and then, passes below the binding weft yarn 4'b, the lower surface side weft 5'd, the binding weft yarn 6'b, the lower surface side weft 7'd and the binding weft yarn 8'b.

Further, in the fabric of the second embodiment, the binding weft yarn 6'f is arranged between the upper surface side wefts. The surface properties are improved by the fact that the binding weft yarn 6'f is arranged at the upper surface side of the binding weft yarn 6'b, and adopts the on-stack structure with the binding weft yarn 6'b.

### BRIEF EXPLANATION OF DRAWINGS

Fig.1 is a design view showing a complete structure of the first embodiment according to the present invention.
Fig.2 is a cross section view taken along warp 1 of the first embodiment.
Fig.3 is a design view showing a complete structure of the second embodiment related to the first embodiment.
Fig.4 is a cross section view taken along warp 1 of the second embodiment.
Fig.5 is a cross section view taken along warp 1' of the second embodiment.
Fig.6 is a plain view showing the surface of the upper surface side of the second embodiment.
Fig.7 is a photograph showing the surface of the two-layered unwoven fabric of the second embodiment.

### EXPLANATION OF SYMBOLS

- 1U, 2U, 3U, 4U: : upper surface side warp
- 1D, 2D, 3D, 4D: : lower surface side warp
- 1'u, 3'u, 5'u, 7'u: : upper surface side weft
- 1'd, 3'd, 5 ' d, 7 ' d: : lower surface side weft
- 2'b, 4'b, 6'b, 8'b: : weft binding yarn
- 2'f, 4'f, 6'f, 8'f: : auxiliary weft

## Claims

1. A two-layer fabric for the manufacturing of unwoven fabrics comprises an upper surface side fabric constituted by upper surface side warps (1U, 2U, 3U, 4U) and upper surface side wefts (1'u, 3'u, 5'u, 7'u), and a lower surface side fabric at least constituted by lower surface side warps (1D, 2D, 3D, 4D) and lower surface side wefts (1'd, 3'd, 5'd, 7'd), said upper surface side fabric and said lower surface side fabric are bound by weft binding yarns (2'b, 4'b, 6'b, 8'b), said weft binding yarns (2'b, 4'b, 6'b, 8'b) are woven so as to be arranged in an inner binding condition so as not to appear on the surface of the fabric,
**characterized in that**
said upper surface side warps (1U, 2U, 3U, 4U) and said upper surface side wefts (1'u, 3'u, 5'u, 7'u) are made of fluorine plastic, wherein said lower surface side warps (1D, 2D, 3D, 4D) and said lower surface side wefts (1'd, 3'd, 5'd, 7'd) and said weft binding yarns (2'b, 4'b, 6'b, 8'b) are formed by general yarn.

2. The two-layer fabric for unwoven fabric according to claim 1, wherein a pair of said upper surface side warps (1U, 2U, 3U, 4U) and a pair of said upper surface side wefts (1'u, 3'u, 5'u, 7'u) are woven so as to be arranged to be perpendicular to the surface of the fabric to form an on-stack structure.

3. The two-layer fabric for unwoven fabric according to claim 1 or claim 2, wherein an auxiliary weft (2'f, 4'f, 6'f, 8'f) is arranged at the upper surface side of said weft binding yarns (2'b, 4'b, 6'b, 8'b) so as to weave said upper surface side fabric and said lower surface side fabric.

4. The two-layer fabric for unwoven fabric according to any of claims 1 to 3, wherein said fluorine plastic is copolymer of ethylene and tetrafluoroethylene (ETFE).

## Patentansprüche

1. Zweilagiges Gewebe zur Herstellung von Vliesstoffen, umfassend ein oberflächenseitiges Gewebe, das aus oberflächenseitigen Kettfäden (1U, 2U, 3U, 4U) und oberflächenseitigen Schussfäden (1'u, 3'u, 5'u, 7'u) besteht, und ein unterflächenseitiges Gewebe, das zumindest aus unterflächenseitigen Kettfäden (1D, 2D, 3D, 4D) und unterflächenseitigen Schussfäden (1'd, 3'd, 5'd, 7'd) gebildet wird, wobei das oberflächenseitige Gewebe und das unterflächenseitiges Gewebe durch Schussbindegarne (2'b, 4'b, 6'b, 8'b) gebunden sind, wobei die Schussbindegarne (2'b, 4'b, 6'b, 8'b) so gewebt sind, dass sie in einem inneren Bindungszustand angeordnet sind, so dass sie nicht auf der Oberfläche des Gewebes erscheinen,
**dadurch gekennzeichnet, dass**
die oberflächenseitigen Kettfäden (1U, 2U, 3U, 4U) und die oberflächenseitigen Schussfäden (1'u, 3'u, 5'u, 7'u) aus Fluorkunststoff hergestellt sind, wobei die unterflächenseitigen Kettfäden (1D, 2D, 3D, 4D) und die unterflächenseitigen Schussfäden (1'd, 3'd, 5'd, 7'd) und die Schussbindegarne (2'b, 4'b, 6'b, 8'b) durch übliches Garn gebildet sind.

2. Zweilagiges Gewebe für Vliesstoff nach Anspruch 1, wobei ein Paar der oberflächenseitigen Kettfäden (1U, 2U, 3U, 4U) und ein Paar der oberflächenseitigen Schussfäden (1'u, 3'u, 5'u, 7'u) so gewebt sind, dass sie senkrecht zur Oberfläche des Gewebes angeordnet sind, um eine On-Stack-Struktur zu bilden.

3. Zweilagiges Gewebe für Vliesstoff nach Anspruch 1 oder Anspruch 2, wobei ein Hilfsschussfaden (2'f, 4'f, 6'f, 8'f) an der oberen Oberflächenseite der Schussbindegarne (2'b, 4'b, 6'b, 8'b) angeordnet ist, um das oberflächenseitiges Gewebe und das unterflächenseitiges Gewebe zu weben.

4. Zweilagiges Gewebe für Vliesstoff nach einem der Ansprüche 1 bis 3, wobei der Fluorkunststoff ein Copolymer aus Ethylen und Tetrafluorethylen (ETFE) ist.

## Revendications

1. Étoffe à deux couches pour la fabrication d'étoffes non tissées comprenant une étoffe côté surface supérieure constituée par des chaînes côté surface supérieure (1U, 2U, 3U, 4U) et des trames côté surface supérieure (1'u, 3'u, 5'u, 7'u), et une étoffe côté surface inférieure constituée par des chaînes côté surface inférieure (1D, 2D, 3D, 4D) et des trames côté surface inférieure (1'd, 3'd, 5'd, 7'd),
Ladite étoffe côté surface supérieure et ladite étoffe côté surface inférieure sont liées par des fils de liaison de trame (2'b, 4'b, 6'b, 8'b), lesdits fils de liaison de trame (2'b, 4'b, 6'b, 8'b) sont tissés de façon à être agencés dans un état de liaison interne de façon à ne pas apparaître à la surface de l'étoffe,
**caractérisée en ce que**
lesdites chaînes côté surface supérieure (1U, 2U, 3U, 4U) et lesdites trames côté surface supérieure (1'u, 3'u, 5'u, 7'u) sont faites de plastique fluoré, dans laquelle lesdites chaînes côté surface inférieure (1D, 2D, 3D, 4D) et lesdites trames côté surface inférieure (1'd, 3'd, 5'd, 7'd) et lesdits fils de liaison de trame (2'b, 4'b, 6'b, 8'b) sont formés par du fil générique.

2. Étoffe à deux couches pour étoffe non tissée selon la revendication 1, dans laquelle une paire desdites chaînes côté surface supérieure (1U, 2U, 3U, 4U) et une paire desdites trames côté surface supérieure (1'u, 3'u, 5'u, 7'u) sont tissées de façon à être agencées pour être perpendiculaires à la surface de l'étoffe afin de former une structure empilée.

3. Étoffe à deux couches pour étoffe non tissée selon la revendication 1 ou la revendication 2, dans laquelle une trame auxiliaire (2'f, 4'f, 6'f, 8'f) est agencée au niveau du côté surface supérieure desdits fils de liaison de trame (2'b, 4'b, 6'b, 8'b) de façon à entrecroiser ladite étoffe côté surface supérieure et ladite étoffe côté surface inférieure.

4. Étoffe à deux couches pour étoffe non tissée selon l'une quelconque des revendications 1 à 3, dans laquelle ledit plastique fluoré est un copolymère d'éthylène et de tétrafluoroéthylène (ETFE).
